# EUROPEAN PATENT SPECIFICATION

(11) **EP 4 197 407 B1**
(45) Date of publication and mention of the grant of the patent: **27.08.2025**
(21) Application number: 22185495.3
(22) Date of filing: 18.07.2022
(51) Int. Cl.: A47J 36/02

(54) **COOKING APPLIANCE AND METHOD FOR PREPARING COOKING APPLIANCE**
KOCHGERÄT UND VERFAHREN ZUR HERSTELLUNG EINES KOCHGERÄTS
APPAREIL DE CUISSON ET PROCÉDÉ DE PRÉPARATION D'APPAREIL DE CUISSON

(30) Priority: 20.12.2021 CN 202111563865
(43) Date of publication of application: 21.06.2023
(73) Proprietor: Vitafoss Trading Co., Ltd., Shenzhen 518104 (CN)
(72) Inventor: LV, Pin, Shenzhen City (CN); TSAI, Mou-fu, Shenzhen City (CN)
(74) Representative: Mewburn Ellis LLP

(56) References cited:
- WO-A1-2019/098726
- CN-A- 111 227 654
- CN-A- 113 083 641
- US-A1- 2011 198 357
- US-A1- 2017 071 401

## Description

### TECHNICAL FIELD

This disclosure relates to the technical field of cooking appliances, and in particular to a cooking appliance and a method for preparing the cooking appliance.

### BACKGROUND

In traditional cooking appliance and household appliance industries, usually, a coating with a low surface tension or a low friction coefficient is sprayed on a surface of a product to make the product non-stick to food, for example, a non-stick coating can be sprayed. Existing non-stick coatings are mainly divided into two categories, one is a fluorocarbon coating with polytetrafluoroethylene (PTFE) as a main film-forming material, and the other is a silicon coating. The former PTFE coating is a linear polymer with a high molecular weight and a large volume, which leads to a low film compactness. In addition, the former has a low heat resistance (a long-term service temperature is only 250°C), has some shortcomings in protecting a metal substrate, and since a coefficient of heat conductivity is only about 0.25 W/mK, a heating efficiency of the product is poor. For the latter organosilicon coating, although hardness can reach 8H or above, wear resistance and non-stickiness are poor. If a surface of the product is slightly worn, the non-stickiness will be greatly reduced, which cannot meet customer's expectation in use.

The fluorocarbon coating and the silicon coating each have low coefficients of heat conductivity, which leads to a low heating efficiency of a cooking appliance.

WO 2019/098726 A1 discloses compositions comprising spherical graphene that can be used for coating cookware.

CN 113083641 A discloses an enamel interlayer non-stick pan comprising a pan blank, a nano enamel coating and a non-stick coating, wherein the pan blank is sequentially coated with the nano enamel coating and the non-stick coating.

CN 111227654 A discloses a graphene inner container for an electromagnetic cooking utensil. The graphene inner container comprises an inner container body and a graphene coating arranged on the inner wall and/or the outer wall of the inner container body.

US 2011/198357 A1 discloses a culinary article comprising a metal substrate having a concave inner face intended to be placed on the side of food which can be introduced into said article and a convex outer face intended to be placed facing a heat source, said inner face being coated in succession, starting from said substrate, with a hard enamel base, which is rough and contains no lead or cadmium, and then with a non-stick coating covering said hard layer.

US 2017/071401 A1 discloses a plasma non-stick pan comprising a pan body; a non-stick layer applied to the pan body; and a plasma layer provided between the non-stick layer and the pan body, wherein the plasma layer comprises a MCrAlY layer sprayed to the surface of the pan body and a mixture layer sprayed outside of the MCrAlY layer, the mixture layer being composed of MCrAlY particles and metal oxide particles.

### SUMMARY

Aspects of the invention are set out in the appended claims.

The present disclosure aims at providing a cooking appliance. In the present disclosure, through graphene and/or graphene derivatives, heat conduction between a body and food is fully realized, and a heating speed and a heating uniformity are effectively improved.

According to the technical solutions disclosed herein, beneficial effects of the present disclosure include the following. In the present disclosure, the cooking appliance with the non-stick layer is prepared. Firstly, the primer layer is attached to the surface of the body of the cooking appliance, the graphene and/or graphene derivatives is tiled in order in the primer layer, and through orderly arrangement of the graphene and/or graphene derivatives, a graphene material is effectively guaranteed to give full play to a heat conductivity, and have uniform and fast heat conduction. In addition, graphene in the primer layer also has an excellent mechanical performance, the graphene cooperates with the uniformly rough structure of the body to effectively support the whole non-stick layer when the graphene is in the primer layer, and the sealing layer effectively protects the graphene. Compared with a traditional fluorocarbon coating, in the present disclosure, the non-stick layer has advantages of high surface hardness, great corrosion resistance, great durable wear resistance and non-stickiness, and long service life, and the non-stick layer is a durable wear resistance non-stick layer with more environmental protection, a high efficiency, and an excellent comprehensive performance. The present disclosure effectively ensures the firmness and the wear resistance of the product.

### BRIEF DESCRIPTION OF THE DRAWINGS

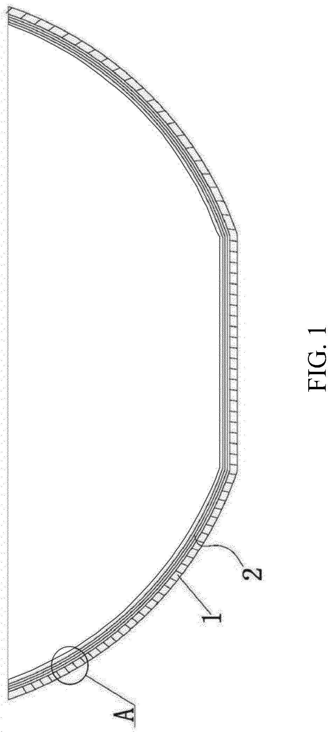

FIG. 1 is a cross-sectional diagram of a cooking appliance in the present disclosure.
FIG. 2 is an enlarged diagram at A in FIG. 1.

In the drawings: body 1; non-stick layer 2; primer layer 21; sealing layer 22; midcoat layer 23; topcoat layer 24.

### DETAILED DESCRIPTION

In order to further explain the technical solution of the present disclosure, the following will describe the present disclosure in detail through specific implementations.

### Implementation 1

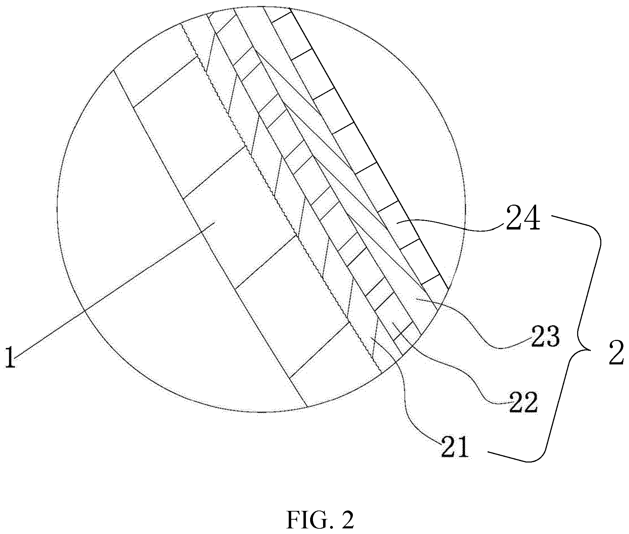

As illustrated in the figure, a cooking appliance is provided in the implementations, and includes a body 1 of the cooking appliance and a non-stick layer 2 coated on a surface of the body 1. The non-stick layer 2 includes a primer layer 21 which is in contact with a side of the body 1, and the primer layer 21 includes flake-like graphene and/or graphene derivatives uniformly distributed. A water-based paint configured to form the primer layer 21 has a mass fraction of graphene and/or graphene derivatives of 28%~32%. The body 1 has a uniformly rough structure with a roughness of 3 µm~5 µm at the side of the body 1 facing the non-stick layer 2. The flake-like graphene and/or graphene derivatives has a radial width of 5 µm~20 µm. The non-stick layer 2 has a thickness of 50 µm~60 µm. Furthermore, as illustrated in FIG. 2, in the non-stick layer 2, a sealing layer 22, a midcoat layer 23, and a topcoat layer 24 are successively included above the primer layer 21. A thickness distribution of each layer is illustrated in table 1. The topcoat layer 24 may be an exterior-most or exteriorly exposed coating layer, and keep food from sticking and make cleanup a breeze. The midcoat layer 23 may be located between the topcoat layer 24 and the primer layer 21, and protect against scratches and abrasion.

A method for preparing a cooking appliance is further provided in the implementations of the present disclosure, and includes following steps. A surface of a body of a cooking appliance is roughened. The surface of the body of the cooking appliance is roughened by sandblasting, and the body has a surface roughness of 3 µm~5 µm. Before spraying the water-based paint, which includes the graphene and/or graphene derivatives and forms the primer layer, on the surface of the body, and after roughening the surface of the body of the cooking appliance, the cooking appliance is cleaned, which includes follows. The cooking appliance is cleaned by an alkaline solution at 35°C~45°C, cleaned by clear water at room temperature for two times, cleaned by an acid solution at room temperature, cleaned by clear water at room temperature, and cleaned by pure water at room temperature, and stoving is performed on the cooking appliance at 150°C.

A water-based paint, which includes graphene and/or graphene derivatives and forms a primer layer, is sprayed on the surface of the body, a sealing layer is sprayed on an undried surface of the primer layer, and baking is performed. After spraying the sealing layer on the undried surface of the primer layer, the baking is performed at 150°C~180°C for 3 min~5 min.

A midcoat layer and a topcoat layer are sprayed on a surface of the sealing layer in sequence and firing is performed, where the firing is performed at 430°C for 3 min~5 min, to obtain the cooking appliance with a target non-stick layer.

Main differences between implementation 2 and implementation 1 are illustrated in table 1 for details.

Main differences between implementation 3 and implementation 1 are illustrated in table 1 for details.

Main differences between implementation 4 and implementation 1 are illustrated in table 1 for details.

A coating used in a comparative example is a polytetrafluoroethylene (PTFE) coating in the related art.

**Table 1 A proportion of thickness of each layer in non-stick layers obtained in implementations 1 to 4**

| item | implementation 1 | implementation 2 | implementation 3 | implementation 4 |
|---|---|---|---|---|
| primer layer | 35% | 38% | 40% | 45% |
| sealing layer | 25% | 22% | 20% | 15% |
| midcoat layer | 20% | 20% | 20% | 20% |
| topcoat layer | 20% | 20% | 20% | 20% |

Performance tests are performed on an identical kind of pan with non-stick layers obtained in implementations 1 to 4 and the comparative example, and specific test methods are as follows.

T1, wear resistance and durability (2.5 kilogram (kg) dry grinding). Fix a sample to a rub tester. Put a Minnesota Mining and Manufacturing (3M) 7447B scouring pad (70 mm long and 30 mm wide) into the sample, press down the scouring pad with a force of 2.5 kg, and wipe back and forth on a surface of the sample at a speed of 33 times/minute. Change the scouring pad every 500 times, and record the number of times until a metal substrate is exposed.

T2, non-stickiness (fried eggs without oil). Place the sample on a flat electric furnace, dry burn and heat the sample, and when a temperature of a surface of an inner coating reaches 140~170°C, put a fresh egg into the sample with a broken shell. When an egg white basically solidifies (a temperature on an inner surface of the sample shall not exceed 210°C), directly pour out the egg without external force. Repeat the above non-stickiness test in T2, and record the number of eggs until an egg is poured out with external force.

T3, hardness test of coating. Place a STAEDTLER^{™} pencil on a No. 46 emery paper and grind a front end of a refill to make an edge of the refill sharp. Place the pencil on a pencil hardness tester correctly. Push the pencil hardness tester forward with a horizontal force, and scratch out a scratch with a length of about 10~20 mm on a coating surface to check whether the coating surface is broken by scratching. Reduce the pencil hardness from 9H to 8H, 7H, 6H, 5H, 4H, 3H, 2H, and H. Repeat the above hardness test in T3, until the coating surface is broken by scratching, and record the pencil hardness when the coating surface is broken by scratching.

T4, heat conduction uniformity. Use an infrared thermal imager to test heat conductivity. The more kinds of color images lead to the greater temperature differences, and the more irregular color image patterns lead to the more uneven temperatures.

T5, heat conduction speed. Put the obtained pan on an induction cooker for dry heating, record time when the temperature rises to 50~55 °C, record time when the temperature rises to 150~155 °C, and calculate heating-up time from 50 °C to 150 °C.

T6, corrosion resistance. Pour 10wt% saline into a sample, observe whether a coating surface is corroded at a fixed temperature, and record the time required for corrosion on the coating surface.

Specific performance test data are illustrated in table 2.

**Table 2 Performance indexes of an identical kind of pan obtained in implementations 1 to 4 and comparative example**

| items | wear resistance and durability | non-stickiness | coating hardness | heat conduction uniformity | heat conduction speed | corrosion resistance (10wt% saline) |
|---|---|---|---|---|---|---|
| implementation 1 | 80,000 times | about 870 | 5H | white-yellow-orange-purple-blue | 90s | 72 hours |
| implementation 2 | 100,000 times | over 1,000 | 6H | white-yellow-orange-blue | 70s | 240 hours |
| implementation 3 | 110,000 times | over 1,000 | 7H | white-yellow-orange -blue | 70s | 240 hours |
| implementation 4 | 90,000 times | over 1,000 | 5H | white-yellow-orange-purple-blue | 120s | 96 hours |
| comparative example | 10,000 times | about 127 | 2H | white-yellow-faint yellow-orange-purple-blue | 150s | 24 hours |

In the present disclosure, the cooking appliance with the non-stick layer is prepared. Firstly, the primer layer is attached to the surface of the body of the cooking appliance, the graphene and/or graphene derivatives is tiled in order in the primer layer, and through orderly arrangement of the graphene and/or graphene derivatives, a graphene material is effectively guaranteed to give full play to a heat conductivity, and have uniform and fast heat conduction. In addition, graphene in the primer layer also has an excellent mechanical performance, the graphene cooperates with the uniformly rough structure of the body to effectively support the whole non-stick layer when graphene is in the primer layer, and the sealing layer effectively protects the graphene. Compared with a traditional fluorocarbon coating, in the present disclosure, the non-stick layer has advantages of high surface hardness, great corrosion resistance, great durable wear resistance and non-stickiness, and long service life, and the non-stick layer is a durable wear resistance non-stick layer with more environmental protection, a high efficiency, and an excellent comprehensive performance. The present disclosure effectively ensures the firmness and the wear resistance of the product.

The above embodiment and drawings are not for limiting the shape and style of the present disclosure. Persons with ordinary skills in the art can make variations or modifications to the embodiment without departing from the scope of the present invention.

## Claims

1. A cooking appliance, comprising a body (1) of the cooking appliance and a non-stick layer (2) coated on a surface of the body, wherein the non-stick layer comprises a primer layer (21) which is in contact with a side of the body, and the primer layer comprises flake-like graphene and/or graphene derivatives uniformly distributed,
**characterized in that**:
the non-stick layer further comprises a sealing layer (22) which is sprayed on an undried surface of the primer layer, wherein the non-stick layer further comprises a midcoat layer (23) and a topcoat layer (24) which are sprayed on a surface of the sealing layer in sequence.

2. The cooking appliance of claim 1, wherein the primer layer is made of a water-based paint and has a mass fraction of graphene and/or graphene derivatives of 28%~32%.

3. The cooking appliance of claim 1, wherein the body has a uniformly rough structure with a roughness of 3 µm~5 µm at the side of the body facing the non-stick layer.

4. The cooking appliance of claim 3, wherein the uniformly rough structure is formed by sandblasting.

5. The cooking appliance of claim 1, wherein the flake-like graphene and/or graphene derivatives has a radial width of 5 µm~20 µm.

6. The cooking appliance of claim 1, wherein the non-stick layer has a thickness of 50 µm~60 µm.

7. A method for preparing a cooking appliance, comprising:
roughening a surface of a body of the cooking appliance;
spraying a water-based paint, which comprises graphene and/or graphene derivatives and forms a primer layer, on the surface of the body; spraying a sealing layer on an undried surface of the primer layer; and performing baking; and
spraying a midcoat layer and a topcoat layer on a surface of the sealing layer in sequence and performing firing, to obtain the cooking appliance with a target non-stick layer.

8. The method of claim 7, further comprising:
before spraying the water-based paint, which comprises the graphene and/or graphene derivatives and forms the primer layer, on the surface of the body, and after roughening the surface of the body of the cooking appliance,
cleaning the cooking appliance, which comprises:
cleaning by an alkaline solution at 35°C~45°C;
cleaning by clear water at room temperature for two times;
cleaning by an acid solution at room temperature;
cleaning by clear water at room temperature;
cleaning by pure water at room temperature; and
perform stoving at 150°C.

9. The method of claim 7, further comprising:
after spraying the sealing layer on the undried surface of the primer layer,
performing the baking at 150°C~180°C for 3 min~5 min.

10. The method of claim 7, further comprising:
performing firing at 430°C for 3 min~5 min.

11. The method of claim 7, wherein roughening the surface of the body of the cooking appliance is roughening the surface of the body of the cooking appliance by sandblasting, and the body has a surface roughness of 3 µm~5 µm.

## Patentansprüche

1. Küchengerät, umfassend einen Körper (1) des Küchengeräts und eine Antihaftschicht (2), die auf eine Oberfläche des Körpers beschichtet ist, wobei die Antihaftschicht eine Primerschicht (21) umfasst, die mit einer Seite des Körpers in Kontakt steht, und wobei die Primerschicht schuppenartiges Graphen und/oder Graphenderivate umfasst, die einheitlich verteilt sind;
**dadurch gekennzeichnet, dass**:
die Antihaftschicht ferner eine Dichtungsschicht (22) umfasst, die auf eine nichtgetrocknete Oberfläche der Primerschicht gesprüht ist, wobei die Antihaftschicht ferner eine mittlere Beschichtungsschicht (23) und eine oberste Beschichtungsschicht (24) umfasst, die in dieser Reihenfolge auf eine Oberfläche der Dichtungsschicht gesprüht sind.

2. Küchengerät nach Anspruch 1, wobei die Primerschicht aus einer Farbe auf Wasserbasis besteht und einen Massenanteil von Graphen und/oder von Graphenderivaten von 28 % - 32 % aufweist.

3. Küchengerät nach Anspruch 1, wobei der Körper eine einheitlich raue Struktur mit einer Rauigkeit von 3 µm - 5 µm an der Seite des Körpers, die der Antihaftschicht zugewandt ist, aufweist.

4. Küchengerät nach Anspruch 3, wobei die einheitlich raue Struktur durch Sandstrahlen gebildet wird.

5. Küchengerät nach Anspruch 1, wobei das schuppenartige Graphen und/oder die Graphenderivate eine radiale Breite von 5 µm - 20 µm aufweisen.

6. Küchengerät nach Anspruch 1, wobei die Antihaftschicht eine Dicke von 50 µm - 60 µm aufweist.

7. Verfahren zur Herstellung eines Küchengeräts, umfassend:
Aufrauen einer Oberfläche eines Körpers des Küchengeräts;
Sprühen einer Farbe auf Wasserbasis, die Graphen und/oder Graphenderivate umfasst und eine Primerschicht bildet, auf die Oberfläche des Körpers; Sprühen einer Dichtungsschicht auf eine nichtgetrocknete Oberfläche der Primerschicht; und Durchführen eines Brennens; und
Sprühen einer mittleren Beschichtungsschicht und einer obersten Beschichtungsschicht auf eine Oberfläche der Dichtungsschicht in dieser Reihenfolge und Durchführen eines Brennens, um das Küchengerät mit einer Ziel-Antihaftschicht zu erhalten.

8. Verfahren nach Anspruch 7, das ferner Folgendes umfasst:
vor dem Sprühen der Farbe auf Wasserbasis, die das Graphen und/oder die Graphenderivate umfasst und die Primerschicht bildet, auf die Oberfläche des Körpers und nach dem Aufrauen der Oberfläche des Körpers des Küchengeräts:
Reinigen des Küchengeräts, das Folgendes umfasst:
Reinigen mit einer alkalischen Lösung bei 35 °C - 45 °C;
zweimaliges Reinigen mit klarem Wasser bei Raumtemperatur;
Reinigen mit einer sauren Lösung bei Raumtemperatur;
Reinigen mit klarem Wasser bei Raumtemperatur;
Reinigen mit reinem Wasser bei Raumtemperatur; und
Durchführen eines Einbrennens bei 150 °C.

9. Verfahren nach Anspruch 7, das ferner Folgendes umfasst:
nach dem Sprühen der Dichtungsschicht auf die nichtgetrocknete Oberfläche der Primerschicht Durchführen des Brennens bei 150 °C - 180 °C für 3 min - 5 min.

10. Verfahren nach Anspruch 7, das ferner Folgendes umfasst:
Durchführen eines Brennens bei 430 °C für 3 min - 5 min.

11. Verfahren nach Anspruch 7, wobei das Aufrauen der Oberfläche des Körpers des Küchengeräts das Aufrauen der Oberfläche des Körpers des Küchengeräts durch Sandstrahlen ist und der Körper eine Oberflächenrauigkeit von 3 µm - 5 µm aufweist.

## Revendications

1. Appareil de cuisson, comprenant un corps (1) de l'appareil de cuisson et une couche anti-adhésive (2) appliquée en revêtement sur une surface du corps, dans lequel la couche anti-adhésive comprend une couche d'apprêt (21) qui est en contact avec un côté du corps, et la couche d'apprêt comprend du graphène et/ou des dérivés de graphène sous forme de paillettes uniformément répartis,
**caractérisé en ce que** :
la couche anti-adhésive comprend en outre une couche d'étanchéité (22) qui est pulvérisée sur une surface non séchée de la couche d'apprêt, dans lequel la couche anti-adhésive comprend en outre une couche intermédiaire (23) et une couche de finition (24) qui sont pulvérisées sur une surface de la couche d'étanchéité en séquence.

2. Appareil de cuisson selon la revendication 1, dans lequel la couche d'apprêt est constituée d'une peinture à base d'eau et présente une fraction massique de graphène et/ou de dérivés de graphène de 28 % à 32 %.

3. Appareil de cuisson selon la revendication 1, dans lequel le corps présente une structure uniformément rugueuse avec une rugosité de 3 µm à 5 µm sur le côté du corps faisant face à la couche anti-adhésive.

4. Appareil de cuisson selon la revendication 3, dans lequel la structure uniformément rugueuse est formée par sablage.

5. Appareil de cuisson selon la revendication 1, dans lequel le graphène et/ou les dérivés de graphène sous forme de paillettes présentent une largeur radiale de 5 µm à 20 µm.

6. Appareil de cuisson selon la revendication 1, dans lequel la couche anti-adhésive présente une épaisseur de 50 µm à 60 µm.

7. Procédé de préparation d'un appareil de cuisson, comprenant les étapes consistant à :
rendre rugueuse une surface d'un corps de l'appareil de cuisson ;
pulvériser une peinture à base d'eau, qui comprend du graphène et/ou des dérivés de graphène et forme une couche d'apprêt, sur la surface du corps ; pulvériser une couche d'étanchéité sur une surface non séchée de la couche d'apprêt ; et effectuer une cuisson ;
pulvériser une couche intermédiaire et une couche de finition sur une surface de la couche d'étanchéité en séquence et effectuer une cuisson, pour obtenir l'appareil de cuisson avec une couche anti-adhésive cible.

8. Procédé selon la revendication 7, comprenant en outre l'étape consistant à :
avant de pulvériser la peinture à base d'eau, qui comprend le graphène et/ou les dérivés de graphène et forme la couche d'apprêt, sur la surface du corps, et après avoir rendu rugueuse la surface du corps de l'appareil de cuisson,
nettoyer l'appareil de cuisson, qui comprend :
un nettoyage par l'intermédiaire d'une solution alcaline entre 35°C et 45°C ;
un nettoyage à l'eau claire à température ambiante deux fois ;
un nettoyage par l'intermédiaire d'une solution acide à température ambiante ;
un nettoyage à l'eau claire à température ambiante ;
un nettoyage à l'eau pure à température ambiante ; et
la réalisation d'un étuvage à 150°C.

9. Procédé selon la revendication 7, comprenant en outre l'étape consistant à :
après avoir pulvérisé la couche d'étanchéité sur la surface non séchée de la couche d'apprêt,
effectuer la cuisson entre 15°C et 18°C pendant 3 min à 5 min.

10. Procédé selon la revendication 7, comprenant en outre l'étape consistant à :
effectuer une cuisson à 43°C pendant 3 min à 5 min.

11. Procédé selon la revendication 7, dans lequel l'étape consistant à rendre rugueuse la surface du corps de l'appareil de cuisson rend rugueuse la surface du corps de l'appareil de cuisson par sablage, et le corps présente une rugosité de surface de 3 µm à 5 µm.
